# EUROPEAN PATENT SPECIFICATION

(11) **EP 1 899 188 B1**
(45) Date of publication and mention of the grant of the patent: **07.09.2011**
(21) Application number: 06741262.7
(22) Date of filing: 20.06.2006
(51) Int. Cl.: B60K 13/02, F02M 27/04

(54) **DEVICE FOR SAVING FUEL AND REDUCING EMISSIONS**
VORRICHTUNG ZUM EINSPAREN VON KRAFTSTOFF UND VERRINGERN VON EMISSIONEN
DISPOSITIF PERMETTANT D' ÉCONOMISER LE CARBURANT ET DE RÉDUIRE LES ÉMISSIONS

(30) Priority: 21.06.2005 AU 2005903248
(43) Date of publication of application: 19.03.2008
(73) Proprietor: Save The World Air, Inc., North Hollywood, CA 91601 (US)
(72) Inventor: MENZELL, Adrian, Broadbeach, Queensland (AU); KOSTIC, John, Robina, Queensland 4230 (AU)
(74) Representative: Long, Edward Anthony
(86) International application number: PCT/AU2006/000861
(87) International publication number: WO 2006/135963

(56) References cited:
- EP-A- 1 602 818
- WO-A-2005/005817
- WO-A1-01/81750
- WO-A1-01/90562
- WO-A1-97/29279
- CA-A1- 2 225 122
- US-A- 4 460 516
- US-B1- 6 178 953

## Description

### Technical Field

This invention relates to a device for saving fuel in combustion engines and reducing emissions, e.g. gaseous emissions to the atmosphere.

### Background Art

This invention relates particularly but not exclusively to a device for saving fuel and reducing emissions for use on internal combustion engines, e.g., normally aspirated engines and engines with fuel injectors. It will therefore be convenient to describe the invention with reference to these example applications.

However, it is to be clearly understood that the invention is capable of broader application.

For example, the invention can be applied to any combustion engine and not just motor vehicle engines.

Incomplete combustion of liquid fuels increases the cost of running engines. Further unburned fuel e.g. hydrocarbons are vented to the atmosphere through the exhaust and are generally harmful to the atmosphere.

Some of the gases emitted into the atmosphere include carbon monoxide, various nitrogen oxides, and unburned hydrocarbons.

Naturally therefore any device which acted to decrease fuel consumption and thereby lower the running costs of a vehicle as well as lowering the pollution released to the atmosphere would be a major advance in the art and would be most advantageous to society generally.

International patent application No. PCT/AU01/00585 describes a fuel saving device including a support which mounts a plurality of magnets in opposed polarities provided in a number of embodiments which enable the device to be incorporated in the fuel system of combustion engines with resulting fuel savings and a reduction in emissions.

It is generally agreed that there is strong evidence of a positive effect when carbon based liquid and gaseous fuels are magnetically influenced.

It is also generally agreed that there is a possibility that the "air" (and probably specifically the O₂ atoms within air) is influenced positively in terms of its ability combined with the gasoline particles.

Our tests to date have shown to our satisfaction that although gasoline can be influenced by magnetic fields arranged in particular alignments and cross alignments, the greatest influence is achieved when the air is treated either individually or in conjunction with the gasoline at the point where the air and gasoline mix.

As a result of researching available data, and our own on-going practical testing observations and recordings, we believe that the fuel that combusts in an engine is not just the gasoline, but is the combination of gasoline and air. This distinction becomes important in understanding where the influence of a magnetic field may be most dominant. Any reference to fuel in this document means "the combination of gasoline and air".

The magnetic influences and/or effects that are most likely to be influencing the gasoline/air mix going into the combustion chamber of the engine include the viscosity of the fluid particles of the fuel.

Practical testing carried out in our research facility in 2002 proved that the introduction of magnetic fields with particular alignments and cross alignments, positively affects the ability of gasoline fluid particles to atomise to a greater extent, into air. The fluid particles of the gasoline/air mix became smaller and lighter.

There is no assertion as to any particular effect of magnetic influence on the gasoline prior to the point of atomisation in air. It should however be noted that Hans Dehmelt of the University of Washington, Seattle, in his 40 years of research into the basic properties of electrons showed that the electron has only four known characteristics: mass, charge, spin and magnetism. The magnetic effects seen on a daily basis, and employed in this device relate to ferromagnetic interaction. When we talk about "non-magnetic", we are actually saying non-ferromagnetic as there is no reaction with ferrite based substances. The recognition of "non-ferromagnetic forces" that are nonetheless magnetic, is a direct result of Dehmelt's work and their influences, although proven to exist, are yet to be quantified.

General laws of physics imply that the smaller the particle, the less surface tension, and the decreased weight of that particle allows for an increased "suspension" time in the air as it travels the distance through the intake manifold from the area of magnetic influence to the combustion chamber.

The fuel velocity through the intake manifold is influential in keeping fluid particles suspended in the air and this ability is enhanced if the fluid particles are smaller and lighter. The greater the amount of fluid in fine suspension on reaching the combustion chamber, the greater the fluid surface area exposed to air at the point of combustion. This has a positive effect on the rate of burn and the completeness of that burn.

The result is that more power is generated from the same amount of fuel and with a more efficient bum less harmful gases are exhausted from the engine.

As the main requirement for combustion to occur in this situation is the presence of oxygen (O₂), it seems logical to deduce that the most influential part of the air portion of fuel is the O₂ molecule.

Practical testing has been carried out in our research facility to identify the influence of magnetic fields on air before it mixes with gasoline to become "the fuel".

There is strong evidence to suggest that "air" (or more likely, specifically the O₂ molecule in air) is susceptible to magnetic influence and may be the more dominant of the affected fuel components of gasoline and air.

There are devices similar to the present invention available. The devices which seem most similar are those disclosed in WO 97/25528, US 4414951 and US3762135. These devices are not the same as the present invention however and the differences between them and the present invention realise improved performance on the part of the present invention.

### Summary Of The Invention

It is thus an object of the present invention to provide improvements to fuel saving devices which may at least partially overcome at least one of the abovementioned disadvantages or provide the consumer with a useful or commercial choice.

In one form, the invention resides in a fuel saving device comprising a support body having at least one flow opening therein and a periphery which adapts the support body for positioning within a sealed environment of a fuel system of a combustion engine in a manner in which the longitudinal axis of the at least one flow opening is co-axial with a fluid flow path, and a plurality of permanent magnets, the polar axes of all magnets oriented parallel to the flow path through the opening, characterised in that the magnets are provided in at least two stacks, each stack containing at least two magnets, the magnets of each stack each have a polar axis extending in the same direction with the magnets of at least one stack having polar axes extending in opposite direction to the other of the at least two stacks.

The support body of the invention is preferably a spacer, defining a passage for the fuel air mixture, which is coupled in series with the rest of the fuel line.

Preferably, there will be a pair of stacks of magnets, the stacks of magnets being on substantially opposed sides of the opening.

Suitably, the plurality of magnets of each stack will be mounted in the same plane; that is, the support body will generally be a substantially planar body. The support body is typically formed of aluminium or a similar metal.

The magnets of each stack may abut each other or may be spaced apart in the stack. Typically, at least one spacing member may be provided between magnets in a stack, the spacing member having a shape similar to that of the magnet.

The magnets can be secured to the support body by key slots of a complimentary shape. Each of the plurality of magnets is suitably keyed into the support body and each has a magnetic face which extends to and is communicable with the at least one flow opening. A portion of the magnets (and any spacing member) may form or assist with defining a sidewall of the flow opening.

The support body is suitably provided with a plurality of apertures therein to facilitate the mounting of the support body in a fuel/air line leading to a combustion chamber of an internal combustion engine.

The support body may be provided with top and bottom cover plates which secure the magnets against displacement via top and bottom surfaces of the support body. Alternatively, the magnets may be secured to the support body using an adhesive material, preferably one which is heat resistant.

There is preferably an even number of magnets keyed into the body in each stack, the poles of opposite stacks of the magnets reversed relative to each other, but the magnets in a stack having aligned polar axes.

The device, as adapted for use in association with a single-throat carburetor, will typically include a pair of stacks but there may be more than one pair of stacks provided. For example, there may be four stacks spaced substantially equidistantly about the circumference of the at least one opening in the support body, arranged at approximately 90° apart from each other.

A further preferred embodiment of the device has six stacks spaced substantially equidistantly about the circumference of a substantially oval shaped central opening in the support body.

The magnets provided according to the invention may be a rare earth or neodymium iron boron magnet. Preferably, a plurality of magnets of this type are provided although alternative configurations of magnet numbers and types of magnets may be used according to the present invention. The rare earth magnets produce high strength magnetic fields. This enhances the magnetic force which is applied to the fuel droplets as they pass through the device. This enhances the breaking up or size reduction of the droplets as they pass through the device.

Naturally, the size of the magnets will influence the strength of the magnetic field generated in the fuel air passageway. In one particular form, each magnet has a cross sectional surface area in the range of 20-50mm x 20-50mm. This will suffice to produce a suitable magnetic field in a fuel air passageway having a diameter of 22 mm to 40mm, preferably about 25mm or 38mm. The depth or thickness of the magnet will typically be 10-30mm, the actual depth being influenced by the thickness of the spacer in which the magnet is received. It will be appreciated however that the size of the magnets can vary.

### Brief Description Of The Drawings

Aspects of the present invention will now be described with reference to the accompanying drawings in which:
FIGURE 1 is a perspective view of a fuel saving device according to one aspect of the present invention.
FIGURE 2 is a perspective view of the magnets of the device illustrated in Figure 1 removed from the device.
FIGURE 3 is a top view of the device illustrated in Figure 1.
FIGURE 4 is a side view of the device illustrated in Figure 1 along line A-A.
FIGURE 5 is an end view of the device illustrated in Figure 1 along line B-B.

### Description Of The Preferred Embodiment

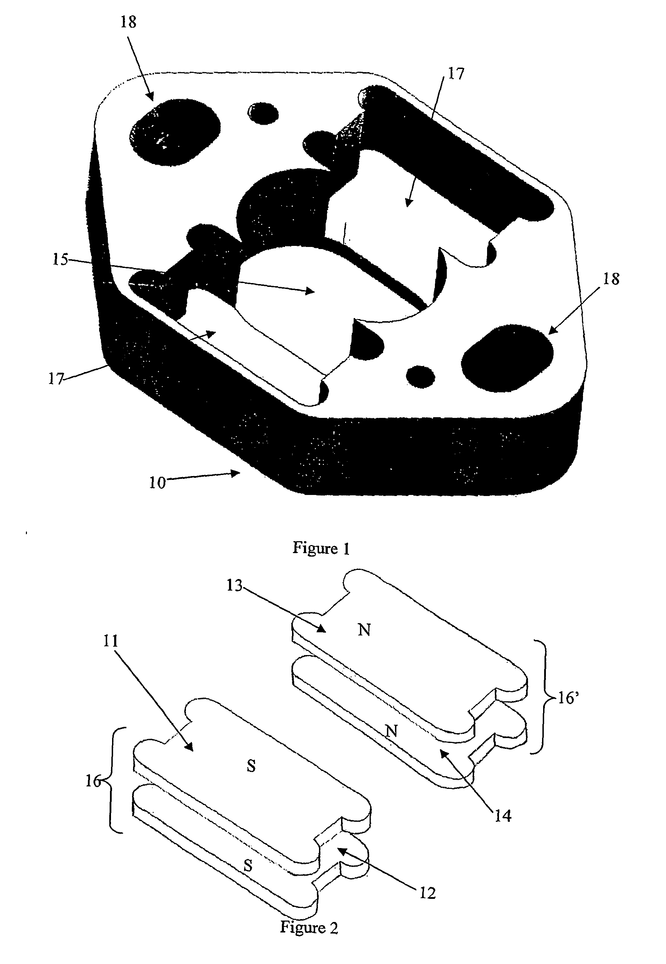

With respect to Figure 1 of the drawings, the fuel saving device illustrated comprises a support body 10 which is generally hexagonal in shape and having a central aperture 15. The support body 10 supports a plurality of permanent magnets 11 (preferably 11 to 14), the support body 10 illustrated being constructed from a substantially unitary metal material and without top or bottom cover plates.

The magnets 11-14 are secured to the support body by key slots 17 of a complimentary shape. Each of the plurality of magnets 11-14 is keyed into the support body 10 and each has a face which extends to and is communicable with the central opening 15. A portion of the magnets (and any spacing member) may form or assist with defining a sidewall of the central aperture 15.

The magnets 11-14 face the central aperture 15. The polar axes of all magnets provided are oriented parallel to the flow path of fuel and air through the aperture 15 in the support body 10. The magnets 11-14 are provided in two magnet stacks 16, 16'. Each magnet stack 16, 16' contains two magnets, the magnets of each stack 16, 16' each having a polar axis extending in the same direction with the magnets of a first stack 16 having polar axes extending in opposite direction to the other stack 16'.

In this case however, the magnets extend only partially throughout the depth of the support body 10 and stop short of the bottom face of the support body 10 by a distance "S".

Such an arrangement provides the option of moving the magnetic field further away from the base of a carburetor and increasing the area of magnetic influence between the point of gasoline atomization and the point of cessation of magnetic influence.

The support body 10 is also provided with a plurality of attachment openings 18 therein to facilitate the mounting of the support body 15 in a fuel/air line leading to a combustion chamber of an internal combustion engine.

With respect to figure 2 of the drawings, the magnets of the stacks 16, 16' are illustrated removed from the support body 10. The polar axes are illustrated by designating the poles of the magnets.

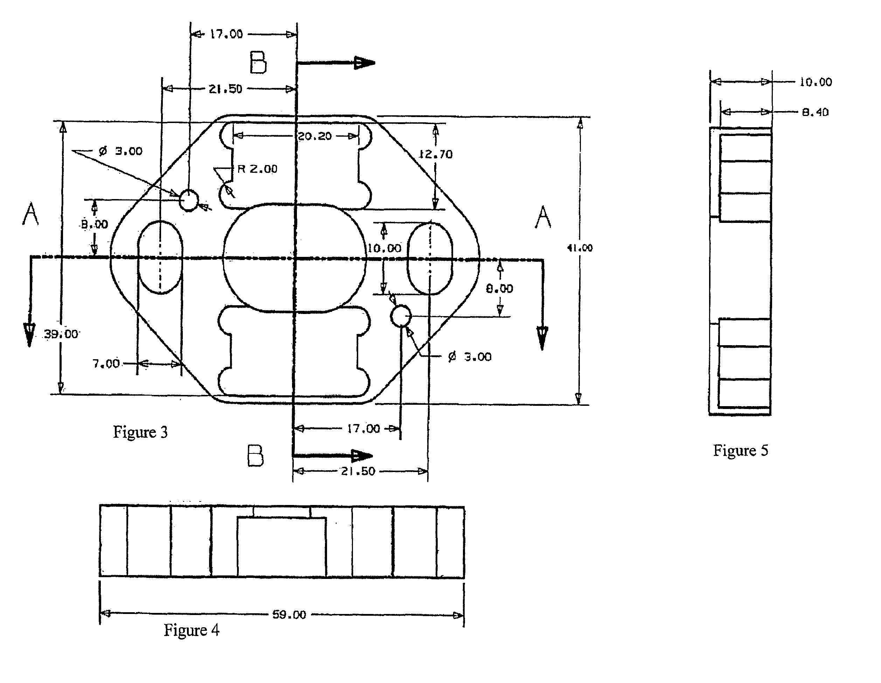

Figure 3 of the drawings show a view from above the device according to the preferred embodiment with typical dimensions.

The device described has been shown to provide significant reductions in fuel consumption and significant reduction in emissions. Use of a device according to the invention generally results in a marked decrease in the level of unburnt hydrocarbons in the exhaust stream from the engine. It also leads to a decrease in the level of carbon monoxide and oxides of nitrogen in the exhaust stream from the engine. Use of the device according to the invention also results in an increase in the level of oxygen in the exhaust stream. An implication of this can be seen to be that the combustion of the hydrocarbons in the engine is more efficient resulting in a lower level of unburnt hydrocarbons in the exhaust stream and more efficient use of oxygen resulting in less oxygen being used in the combustion process.

Various experiments have been performed using the device of the invention. The following is a typical example of emission levels and fuel efficiency from such experiments, including comparison to the Euro II standard.

### Experiment 1

The tests were conducted in December 2005 at the Automotive Emission Laboratory, Pollution Control Department, Ministry of Natural Resources and Environment of Thailand, and were performed jointly with S.P. Suzuki of Thailand, the authorized distributor of Suzuki products in Thailand. The tests were conducted on a used, 4-stroke motorcycle.

These certified test results were better than EURO II standards in all three of the harmful exhaust emissions by significant amounts as shown below:

| | *THC* | *NOx* | *CO* |
|---|---|---|---|
| *EURO II Standard* | *1.20 g*/*km* | *.30 g*/*km* | *5.50 g*/*km* |
| *With ZEFS Device* | *.52 glkm* | *.10 g*/*km* | *1.42 glkm* |
| *% Below EURO II* | *56%* | *65%* | *74%* |

In addition, during the testing, horsepower increased at all ranges, peaking at 18.8% at 50 km/h. Even more significant was the calculation by the laboratory that fuel economy increased 33% over the baseline tests.

### Experiment 2

This set of tests were conducted on a new Chinese-manufactured carbureted 4-stroke Suyijia SZK125 motorcycle, and were better than EURO3 standards for motorcycles of 150cc or less. The tests were conducted in early March 2006 at the Hong Kong Exhaust Emissions Laboratory (HKEEL) in Hong Kong, a certified laboratory of the United Kingdom's Vehicle Certification Agency (VCA).

The certified test results surpassed EURO3 standards in all three of the harmful exhaust emissions by the amounts, as shown below:

| | *THC* | *NOx* | *CO* |
|---|---|---|---|
| *EURO3 Stage Standard* | *0.8 g*/*km* | *0.15 g*/*km* | *2.0 g*/*km* |
| *With ZEFS Device* | *0.33 g*/*km* | *0.108 g*/*km* | *1.86 g*/*km* |
| *% Below EURO3* | *59%* | *28%* | *7%* |

In addition, fuel economy increased 7% over the baseline tests.

It will of course be realised that the above has been given by way of illustrative examples of the invention and that all such modifications and variations thereto as would be apparent to persons skilled in the art are deemed to fall within the broad scope and ambit of the invention.

In the present specification and claims, the word "comprising" and its derivatives including "comprises" and "comprise" include each of the stated integers but does not exclude the inclusion of one or more further integers.

Reference throughout this specification to "one embodiment" or "an embodiment" means that a particular feature, structure, or characteristic described in connection with the embodiment is included in at least one embodiment of the present invention. Thus, the appearance of the phrases "in one embodiment" or "in an embodiment" in various places throughout this specification are not necessarily all referring to the same embodiment. Furthermore, the particular features, structures, or characteristics may be combined in any suitable manner in one or more combinations.

## Claims

1. A fuel saving device comprising a support body (10) having at least one flow opening (15) therein and a periphery which adapts the support body (10) for positioning within a sealed environment of a fuel system of a combustion engine in a manner in which the longitudinal axis of the at least one flow opening (15) is coaxial with a fluid flow path, and a plurality of permanent magnets (11, 12, 13, 14) the polar axes of all magnets oriented parallel to the flow path through the opening (15), **characterised in that** the magnets (11, 12, 13, 14) are provided in at least two stacks (16, 16'), each stack containing at least two magnets (11, 12, 13, 14), the magnets of each stack (16, 16') each have a polar axis extending in the same direction with the magnets of at least one stack (16) having polar axes extending in opposite direction to the other (16') of the at least two stacks.

2. A fuel saving device according to claim 1 wherein the support body is a spacer, at least partially defining a passage for a fuel/air mixture, and which is coupled in series with the rest of the fuel line.

3. A fuel saving device according to claim 1 wherein a pair of stacks of magnets is provided, the stacks of magnets being on substantially opposed sides of the opening.

4. A fuel saving device according to claim 3 wherein the magnets of each stack abut each other.

5. A fuel saving device according to claim 3 further including at least one spacing member provided between magnets in a stack, the spacing member having a shape similar to that of the magnet.

6. A fuel saving device according to claim 3 wherein the magnets are secured to the support body in openings of a complimentary shape.

7. A fuel saving device according to claim 3 wherein each of the plurality of magnets is keyed into the support body and each has a face which extends to and is communicable with the at least one flow opening, defining at least part of a passage for a fuel/air mixture.

8. A fuel saving device according to claim 3 wherein the support body is provided with a plurality of apertures therein to facilitate the mounting of the support body in a fuel/air line leading to a combustion chamber of an internal combustion engine.

9. A fuel saving device according to claim 3 wherein the support body has top and bottom cover plates which secure the magnets against displacement via top and bottom surfaces of the support body.

10. A fuel saving device according to claim 3 wherein the magnets are secured to the support body using a heat resistant adhesive material.

11. A fuel saving device according to claim 3 wherein the polar axis of opposite stacks of the magnets are reversed relative to each other, but the magnets in a stack have aligned polar axes.

12. A fuel saving device according to claim 1 wherein the magnets provided are a rare earth or neodymium iron boron magnet.

## Patentansprüche

1. Kraftstoffsparvorrichtung, welche umfasst: einen Tragkörper (10) mit mindestens einer darin befindlichen Durchflussöffnung (15) und einem Rand, welcher den Tragkörper (10) für eine Positionierung innerhalb einer abgedichteten Umgebung eines Kraftstoffsystems eines Verbrennungsmotors geeignet macht, auf eine Weise, bei der die Längsachse der mindestens einen Durchflussöffnung (15) koaxial mit einem Fluidströmungsweg ist, und mehrere Permanentmagnete (11, 12, 13, 14), wobei die Polachsen aller Magnete parallel zu dem Strömungsweg durch die Öffnung (15) ausgerichtet sind, **dadurch gekennzeichnet, dass** die Magnete (11, 12, 13, 14) in mindestens zwei Stapeln (16, 16') vorgesehen sind, wobei jeder Stapel mindestens zwei Magnete (11, 12, 13, 14) enthält, wobei die Magnete jedes Stapels (16, 16') jeweils eine Polachse aufweisen, die sich in derselben Richtung erstreckt, wobei die Magnete mindestens eines Stapels (16) Polachsen aufweisen, die sich in entgegengesetzter Richtung erstrecken wie bei dem anderen (16') der mindestens zwei Stapel.

2. Kraftstoffsparvorrichtung nach Anspruch 1, wobei der Tragkörper ein Abstandhalter ist, der mindestens teilweise einen Durchlass für ein Kraftstoff-Luft-Gemisch definiert, welcher mit dem restlichen Teil der Kraftstoffleitung in Reihe geschaltet ist.

3. Kraftstoffsparvorrichtung nach Anspruch 1, wobei ein Paar von Stapeln von Magneten vorgesehen ist, wobei sich die Stapel von Magneten auf im Wesentlichen gegenüberliegenden Seiten der Öffnung befinden.

4. Kraftstoffsparvorrichtung nach Anspruch 3, wobei die Magnete jedes Stapels aneinander anliegen.

5. Kraftstoffsparvorrichtung nach Anspruch 3, welche ferner mindestens ein Distanzstück aufweist, das zwischen Magneten in einem Stapel vorgesehen ist, wobei das Distanzstück eine Form hat, die derjenigen des Magneten ähnlich ist.

6. Kraftstoffsparvorrichtung nach Anspruch 3, wobei die Magnete an dem Tragkörper in Öffnungen von einer komplementären Form befestigt sind.

7. Kraftstoffsparvorrichtung nach Anspruch 3, wobei jeder von den mehreren Magneten in dem Tragkörper befestigt ist und jeweils eine Seitenfläche aufweist, welche sich zu der mindestens einen Durchflussöffnung erstreckt und mit dieser in Verbindung bringbar ist, wobei sie mindestens einen Teil eines Durchlasses für ein Kraftstoff-Luft-Gemisch definiert.

8. Kraftstoffsparvorrichtung nach Anspruch 3, wobei der Tragkörper mit mehreren in ihm ausgebildeten Löchern versehen ist, um die Anbringung des Tragkörpers in einer Kraftstoff-Luft-Leitung, die zu einer Brennkammer einer Brennkraftmaschine führt, zu erleichtern.

9. Kraftstoffsparvorrichtung nach Anspruch 3, wobei der Tragkörper eine obere und eine untere Abdeckplatte aufweist, welche die Magnete festhalten, so dass sie bezüglich der Ober- und Unterseite des Tragkörpers nicht verschoben werden können.

10. Kraftstoffsparvorrichtung nach Anspruch 3, wobei die Magnete unter Verwendung eines wärmebeständigen Klebstoffes an dem Tragkörper befestigt sind.

11. Kraftstoffsparvorrichtung nach Anspruch 3, wobei die Polachsen einander gegenüberliegender Stapel der Magnete entgegengesetzt zueinander ausgerichtet sind, die Magnete in einem Stapel jedoch gleich ausgerichtete Polachsen aufweisen.

12. Kraftstoffsparvorrichtung nach Anspruch 1, wobei die vorgesehenen Magnete Seltenerde- oder Neodym-Eisen-Bor-Magnete sind.

## Revendications

1. Dispositif d'économie de carburant comprenant un corps de support (10) possédant au moins une ouverture d'écoulement (15) dans celui-ci et une périphérie qui adapte le corps de support (10) pour le positionnement à l'intérieur d'un environnement étanche d'un circuit d'alimentation d'un moteur à combustion d'une manière telle que l'axe longitudinal de l'au moins une ouverture d'écoulement (15) soit coaxial avec un trajet d'écoulement de fluide, et une pluralité d'aimants permanents (11, 12, 13, 14), les axes polaires de tous les aimants étant orientés parallèlement au trajet d'écoulement à travers l'ouverture (15), **caractérisé en ce que** les aimants (11, 12, 13, 14) sont prévus dans au moins deux empilements (16, 16'), chaque empilement contenant au moins deux aimants (11, 12, 13, 14), les aimants de chaque empilement (16, 16') possèdent chacun un axe polaire s'étendant dans la même direction, les aimants d'au moins un empilement (16) possédant des axes polaires s'étendant dans une direction opposée à l'autre (16') des au moins deux empilements.

2. Dispositif d'économie de carburant selon la revendication 1, dans lequel le corps de support est une pièce d'espacement, définissant au moins partiellement un passage pour un mélange carburant/air, et qui est accouplée en séries avec le reste de la conduite de carburant.

3. Dispositif d'économie de carburant selon la revendication 1, dans lequel une paire d'empilements d'aimants est prévue, les empilements d'aimants étant sur des côtés sensiblement opposés de l'ouverture.

4. Dispositif d'économie de carburant selon la revendication 3, dans lequel les aimants de chaque empilement sont contigus les uns aux autres.

5. Dispositif d'économie de carburant selon la revendication 3, comprenant en outre au moins un élément d'espacement prévu entre des aimants dans un empilement, l'élément d'espacement présentant une forme similaire à celle de l'aimant.

6. Dispositif d'économie de carburant selon la revendication 3, dans lequel les aimants sont fixés au corps de support dans des ouvertures de forme complémentaire.

7. Dispositif d'économie de carburant selon la revendication 3, dans lequel chacun de la pluralité d'aimants est claveté dans le corps de support et chacun possède une face qui s'étend jusqu'à et peut communiquer avec l'au moins une ouverture d'écoulement, définissant au moins une partie d'un passage pour un mélange carburant/air.

8. Dispositif d'économie de carburant selon la revendication 3, dans lequel le corps de support est pourvu d'une pluralité d'ouvertures dans celui-ci pour faciliter le montage du corps de support dans une conduite de carburant/air conduisant à une chambre de combustion d'un moteur à combustion interne.

9. Dispositif d'économie de carburant selon la revendication 3, dans lequel le corps de support comporte des plaques couvercles supérieure et inférieure qui fixent les aimants, pour empêcher le déplacement, par l'intermédiaire de surfaces supérieure et inférieure du corps de support.

10. Dispositif d'économie de carburant selon la revendication 3, dans lequel les aimants sont fixés au corps de support en utilisant un matériau adhésif résistant à la chaleur.

11. Dispositif d'économie de carburant selon la revendication 3, dans lequel les axes polaires d'empilements opposés des aimants sont inversés les uns par rapport aux autres, mais les aimants dans un empilement possèdent des axes polaires alignés.

12. Dispositif d'économie de carburant selon la revendication 1, dans lequel les aimants prévus sont un aimant en terre rare ou néodyme fer bore.
